# DEMANDE DE BREVET EUROPEEN

(11) **EP 1 372 278 A1**
(43) Date de publication de la demande: **17.12.2003**
(21) Numéro de dépôt: 03291178.6
(22) Date de dépôt: 20.05.2003
(51) Int. Cl.: H04B 10/17, H04L 7/00

(54) **Composant semi-conducteur monolithique pour la régénération de signaux optique**

(30) Priorité: 10.06.2002 FR 0207082
(71) Demandeur: ALCATEL, 75008 Paris (FR)
(72) Inventeur: Shen, Alexandre, 75018 Paris (FR); Sahri, Nabil, 92290 Chatenay-Malabry (FR); Emery, Jean-Yves, 91120 Palaiseau (FR)
(74) Mandataire: Fournier, Michel Robert Marie

(57) **Abrégé**

Pour la régénération d'un signal optique binaire (s_{d}, s_{E2}), le composant semiconducteur (100) comprend :
- une structure d'absorbant saturable (3) comportant une section d'absorbant saturable (31),
- un premier guide optique (1, 11 à 16), définissant un premier axe de guidage (X), disposé de part et d'autre de la section (31),
- un deuxième guide optique (2, 21 à 24), définissant un deuxième axe de guidage (Y) se croisant avec le premier axe (X) dans la section (31) et disposé de part et d'autre de la section (31).
   La structure d'absorbant saturable a une dimension suivant le premier axe de guidage supérieure à sa dimension suivant le deuxième axe.
   Les premier et deuxième guides servent à injecter respectivement un signal optique d'horloge (c₁) et le signal optique binaire (s_{d}, s_{E2}).

Application aux systèmes de transmission optique pour la régénération de signaux selon deux régimes de régénération distincts.

## Description

La présente invention concerne la régénération des signaux optiques de données et se rapporte plus particulièrement à un composant semi-conducteur monolithique pour la régénération tout optique selon des premier et deuxième régimes de régénération distincts d'au moins un tel signal.

De manière connue, dans les systèmes de transmissions de données binaires par voie optique, un signal optique de données émis est généralement sous la forme d'une onde optique porteuse modulée en amplitude au rythme d'une horloge. Le signal émis se propage alors dans des fibres optiques, dans des noeuds de communication et autres dispositifs optiques adaptés aux télécommunications. Lors de sa propagation, notamment sur de longues distances, le signal de données subit des pertes optiques et se modifie. Pour compenser le bruit parasite accumulé, la distorsion du signal et les décalages temporels, il apparaît donc nécessaire de le régénérer.

Actuellement, des dispositifs de régénération tout optique dite "3R" (Remise en forme, Resynchronisation, Réamplification) sont en étude et développement dans les laboratoires. Le document intitulé « Novel Polarization-insensitive Synchronous Modulator for 20 Gbit/s All Optical Régénération », D. Rouvillain et autres, OFC 2002, TuN3, pp 83-84, Anaheim, 2002 divulgue un tel régénérateur 3R de structure complexe. Ce régénérateur comporte un amplificateur optique à fibre dopée erbium (EDFA), un sous-système réalisant la re-synchronisation qui contient une cavité optique incorporant un absorbant saturable et un système de récupération de l'horloge optique qui contient à son tour un dispositif de conversion d'une fraction du signal optique de données à régénérer en un signal électronique qui, après filtrage, commande un modulateur électro-optique de type Mach-Zehnder pour la reconversion électronique optique. Ce modulateur couplé en entrée à une diode laser polarisée en continu émet ainsi l'horloge optique sous forme d'un train d'impulsions. Après passage dans l'EDFA, le signal optique de données à régénérer est injecté dans l'absorbant saturable avec l'horloge optique préalablement retardée au moyen d'une ligne optique à retard. La remise en forme du signal est assurée par la propagation dans une fibre optique, en utilisant la combinaison des effets non linéaires (Kerr) et de la dispersion chromatique.

Cependant, la régénération 3R n'est pas adaptée et/ou utile à toutes les étapes de transmission de signaux de données, par exemple en début de la transmission ou en réception. Ce type de dispositif n'est pas optimisé pour fonctionner avec tous les équipements associés aux télécommunications optiques (photodétecteurs, module de monitoring, moyens de corrections d'erreurs de transmission).

L'invention propose un nouveau dispositif de régénération tout optique, aisément intégrable et peu onéreux, capable de réaliser deux modes de régénération possibles de signaux de données indépendamment l'un de l'autre, pour une meilleure modularité d'emploi.

A cet effet, l'invention a pour objet un composant semi-conducteur monolithique pour la régénération selon des premier et deuxième régimes de régénération distincts d'au moins un signal optique de données ayant la forme d'une onde optique porteuse modulée en amplitude au rythme d'une fréquence de modulation, ladite régénération utilisant un signal d'horloge optique de fréquence de répétition sensiblement égale à ladite fréquence de modulation, ledit composant comprenant :
- une structure d'absorbant saturable comportant à l'une de ses extrémités une première section d'absorbant saturable,
- un premier guide optique, définissant un premier axe de guidage, disposé de part et d'autre de ladite première section, le premier guide étant apte à injecter ledit signal d'horloge dans ladite première section, une sortie de ce premier guide étant prévue pour délivrer un premier signal régénéré de données selon ledit premier régime,
- un deuxième guide optique, définissant un deuxième axe de guidage se croisant avec le premier axe dans ladite première section, disposé de part et d'autre de ladite première section, le deuxième guide étant apte à injecter le signal de données dans ladite première section, une sortie de ce deuxième guide étant prévue pour délivrer un deuxième signal régénéré de données selon ledit deuxième régime,
ladite structure d'absorbant saturable ayant une dimension suivant le premier axe de guidage supérieure à sa dimension suivant le deuxième axe de guidage.

On entend par monolithique le fait que l'ensemble des éléments optiques du composant est fabriqué sur un substrat commun par des empilements de matériaux majoritairement semi-conducteurs déposés par épitaxie.

De par sa conception, le composant est compact et aisément intégrable dans un module optoélectronique, et facile à réaliser. En outre, le coût de mise en boîtier du composant ainsi que les instabilités d'origines mécaniques sont minimisés.

Le composant selon l'invention fournit un premier signal régénéré formé par une modulation du signal d'horloge par la séquence de données portée par le signal de données, modulation réalisée dans la première section d'absorbant saturable. Ce premier signal correspond donc à un signal de données synchronisé et mis en forme (impulsions '1' étroites et faiblement distordues), et de longueur d'onde porteuse correspondant à celle de l'horloge optique injectée.

La configuration de croisement des guides optiques selon l'invention permet d'éviter les interactions interférométriques entre photons d'origine différente : les longueurs d'onde de l'horloge optique et du signal à régénérer peuvent être indifféremment distinctes ou égales. Ce premier régime de régénération permet d'intégrer la fonction "conversion de longueur d'onde".

La longueur de la structure d'absorbant saturable suivant le premier axe de guidage est choisie pour atténuer suffisamment les impulsions résiduelles de l'horloge optique qui forment les données '0'. Le premier signal régénéré de données présente de cette façon un taux d'extinction, rapport de la puissance du niveau haut associé à une donnée '1' à la puissance du niveau bas associé à une donnée '0', suffisant.

Le composant selon l'invention fournit simultanément un deuxième signal correspondant au signal optique de données 'remodulé' par l'horloge optique dans la première section d'absorbant saturable qui se comporte comme une porte optique et dont la transmission est modulée à la cadence de l'horloge optique. Le deuxième signal de données est ainsi synchronisé.

Le premier signal peut être utilisé pour transmettre des données et le deuxième signal par exemple pour diagnostiquer les erreurs de données du signal perturbé, en association à des moyens détecteurs/correcteurs d'erreurs d'un système de transmission optique.

L'invention s'applique également lorsque le signal de données est un signal multiplex de longueur d'onde, encore noté signal «WDM» (de anglais "Wavelength Division Multiplex"). Pour traiter en parallèle tous les canaux WDM, il n'est pas nécessaire au préalable de les démultiplexer en longueur d'onde.

Dans ce cas, seul le deuxième régime de régénération est fonctionnel. L'absorbant saturable de la première section est sensible à la puissance lumineuse totale du signal WDM, c'est-à-dire à la puissance de l'ensemble des canaux WDM. Aussi, la puissance totale ne doit pas dépasser une valeur limite fixée par la puissance de saturation de l'absorbant.

Dans cette configuration d'utilisation, il peut être utile d'effectuer préalablement à leurs injections une synchronisation grossière des canaux WDM afin de recaler les temps bits se chevauchant, par exemple au moyen de lignes à retard débouchant sur l'entrée du deuxième guide. Les signaux de données délivrés par la sortie du premier guide sont donc synchronisés par l'horloge optique qui supprime le bruit de phase, facteur de désynchronisation aléatoire des impulsions dans chaque temps bit.

Les guides optiques sont passifs au sens où ils sont transparents aux longueurs d'onde de fonctionnement (longueur d'onde porteuse et de l'horloge optique) du composant.

L'invention peut s'appliquer aux signaux de données modulés selon un format NRZ ("Non Return to Zéro" en anglais) ou un format RZ ("Return to Zero" en anglais) ou de type soliton. Les premier et deuxième signaux obtenus par l'invention sont de format RZ dans tous les cas.

La fonction de réamplification peut être réalisée en sortie dudit composant par un amplificateur à fibre, ou un amplificateur de type Raman, ou être intégrée dans le composant pour l'un et/ou l'autre des deux régimes de régénération.

Avantageusement, ladite structure d'absorbant saturable peut comporter une deuxième section d'absorbant saturable, disposée entre la première section et ladite sortie du premier guide, et comporter un premier amplificateur optique disposé entre les première et deuxième sections d'absorbant saturable.

La deuxième section d'absorbant saturable rallonge la longueur de la structure et donc améliore le taux d'extinction du premier signal. Avec l'emploi du premier amplificateur optique, le premier régime de régénération est de type '3R'.

Dans un mode de réalisation avantageux, le composant comporte
- un second amplificateur optique disposé entre la deuxième section d'absorbant saturable et ladite sortie du premier guide, et
- un troisième amplificateur optique disposé entre la première section d'absorbant saturable et la sortie dudit deuxième guide.

Avec l'emploi du troisième amplificateur optique, le deuxième régime de régénération est de type '2R' (pour Resynchronisation, Réamplification).

Les premier et deuxième axes de guidage peuvent être sensiblement perpendiculaires et lesdits premier et deuxième guides peuvent avoir une forme de ruban, de type classique, enterré ou non, pour une simplicité de fabrication.

Dans un mode de réalisation préféré, la première section d'absorbant saturable a une forme de ruban, de longueur supérieure ou égale à la largeur dudit deuxième guide.

Dans ce mode de réalisation, la deuxième section d'absorbant saturable a une forme de ruban, de longueur supérieure à la longueur du ruban de la première section d'absorbant saturable.

Pour renforcer son intégration, le composant peut de préférence comporter un circuit optique de récupération d'horloge optique apte à produire ledit signal d'horloge et à l'injecter dans l'entrée du premier guide.

Dans cette configuration, l'horloge optique est générée à partir du signal de données.

Dans un mode de réalisation avantageux, ledit circuit optique de récupération d'horloge optique comporte un oscillateur laser à blocage de modes ayant un guide laser en forme de ruban, comprenant successivement suivant ledit premier axe : une section de gain, une section de phase, une section d'absorbant saturable. Ce dispositif comporte en outre un guide optique secondaire, en forme de ruban, d'axe de guidage distinct du premier axe de guidage, apte à injecter dans ladite section d'absorbant saturable un signal secondaire extrait dudit signal de données.

Le signal émis par le circuit de récupération forme un train d'impulsions d'horloge de bonne qualité (forme symétrique, stabilité temporelle...). La largeur temporelle des impulsions d'horloge est fixée par le choix de la largeur spectrale du gain.

Dans un autre mode de réalisation préféré, ledit circuit optique de récupération d'horloge optique comporte un oscillateur laser autopulsant ayant un guide laser en forme de ruban, comprenant successivement, suivant ledit premier axe, une section de gain et une section de phase, Ce circuit comporte en outre un guide optique secondaire, en forme de ruban, d'axe de guidage distinct du premier axe de guidage, apte à injecter dans ladite section de gain un signal secondaire extrait dudit signal de données.

L'emploi d'un oscillateur laser autopulsant a pour avantage de faibles contraintes de réalisation et une bonne tolérance dans les critères de fonctionnement.

De préférence, ladite structure et éventuellement le circuit de récupération d'horloge utilise au moins un élément absorbant saturable de type sans électrode et de préférence choisi parmi les éléments absorbants saturables irradiés, absorbants saturables implantés, absorbants saturables de croissance à basse température et absorbants saturables à dislocations.

Ces éléments sont connus en soi et, contrairement aux modulateurs électro-absorbants utilisables comme absorbants saturables, de tels éléments absorbants saturables n'ont pas besoin d'être alimentés électriquement, ce qui simplifie la structure et la fabrication du composant selon l'invention.

Les absorbants saturables à dislocations sont notamment décrits dans la demande de brevet FR-A-2784202.

Ces absorbants peuvent être choisis rapides, c'est-à-dire présenter un temps de réponse de l'ordre de grandeur de la largeur temporelle des impulsions ultracourtes de l'horloge optique. Le temps de réponse est par exemple égale à 2,5 ps environ pour une fréquence d'horloge de 160 GHz.

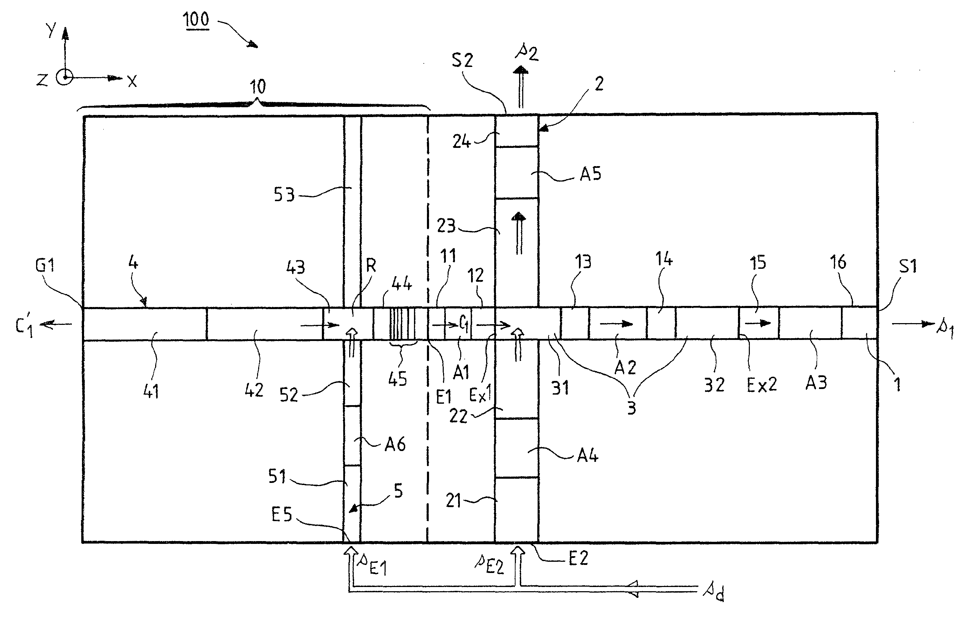

Les caractéristiques et objets de la présente invention ressortiront de la description détaillée donnée ci-après en regard de la figure annexée, présentée à titre illustratif et nullement limitatif.

La figure unique représente une vue schématique de dessus d'un composant semi-conducteur monolithique 100 dans un mode de réalisation préféré.

Ce composant semi-conducteur monolithique 100 est par exemple conçu pour la régénération tout optique selon des premier et deuxième régimes de régénération distincts d'un signal optique de données S_{d} sous forme d'une onde optique porteuse dans la bande C (1,535 µm -1,560 µm), qui modulée en amplitude, par exemple à 160 Gbit/s. Pour ce faire, est utilisé un signal d'horloge optique C₁ de fréquence de répétition égale à 160 GHz environ.

Le composant 100 est monolithique car formé d'empilements majoritairement semi-conducteurs déposés par épitaxie sur un substrat commun en InP suivant un axe vertical Z.

Le composant 100 comprend principalement :
- un premier guide 1 de type ruban, monomode, d'axe longitudinal de guidage X de signaux optiques entre une entrée E1 et une sortie S1, et divisé en six sections discontinues de guidage 11 à 16 comportant une couche de guidage (non visible) en un matériau transparent aux longueurs d'onde de la bande C,
- un deuxième guide 2 de type ruban, monomode, d'axe latéral de guidage Y de signaux optiques entre une entrée E2 et une sortie S2, divisé en quatre sections discontinues de guidage 21 à 24 comportant une couche de guidage en un matériau transparent aux longueurs d'onde de la bande C (non visible),
- une structure d'absorbant saturable sans électrode 3, réalisée par irradiation ionique par exemple, comportant entre une extrémité d'entrée Ex1 et une extrémité de sortie Ex2 de signaux optiques :
   - une première section d'absorbant saturable 31, à géométrie ruban, disposée à l'intersection des axes de guidage X et Y, intercalée respectivement entre des sections de guidage 12 et 13 du premier guide 1 et des sections de guidage 22 et 23 du deuxième guide 2,
   - une deuxième section d'absorbant saturable à géométrie ruban 32 disposée en aval de la première section 31 suivant l'axe longitudinal X, intercalée entre des sections de guidage 14, 15 du premier guide 1,

Le ruban de la première section d'absorbant saturable 31 est de longueur, suivant l'axe longitudinal X, égale à 3,5 µm et de largeur, suivant l'axe latéral Y égale à 2,5 µm.

Le ruban de la deuxième section d'absorbant saturable 32 de longueur, suivant l'axe longitudinal X, égale à 9 µm et de largeur, suivant l'axe latéral Y égale à 2,5 µm.

Le spectre de photoluminescence de l'absorbant saturable utilisé est ajusté pour contenir les longueurs d'onde de l'onde porteuse et de l'horloge optique appartenant également à la bande C.

Les rubans des premier et deuxième guides 1, 2 sont respectivement de largeur égale 2,5 µm et 3 µm.

Trois amplificateurs optiques semi-conducteurs appelés 'SOA' A1, A2, A3 réalisés sous la forme de sections amplificatrices de type ruban sont couplés au premier guide 1 et respectivement disposés entre les sections de guidage 11 et 12, 13 et 14, 15 et 16.

Deux amplificateurs optiques de type 'SOA' A4, A5 également réalisés sous la forme de sections amplificatrices de type ruban sont couplés au deuxième guide 2 et respectivement disposés entre les sections de guidage 21 et 22, 23 et 24.

La figure n'est pas représenté à l'échelle : la longueur des SOA étant de l'ordre de 300 µm.

Un circuit optique 10 de récupération d'horloge optique est intégré dans le composant 100 de façon à injecter ladite horloge optique C₁ récupérée dans l'entrée E1 du premier guide 1.

Le circuit optique 10 de récupération d'horloge optique comporte un oscillateur laser à blocage de modes ayant un guide laser 4 de type ruban. Le guide laser 4 comprend successivement suivant l'axe longitudinal X:
- une section de gain 41, alimentée par un premier courant de porteurs (non représenté), de largeur spectrale de gain Δ ~ 160 GHz,
- une section de phase 42, alimentée par un deuxième courant de porteurs (non représenté),
- une section d'absorbant saturable par irradiation ionique 43,
- une section de guidage 44,
- un réseau de Bragg 45 à pas variable, le pas s'élargissant préférentiellement suivant l'axe X, de longueur d'onde centrale voisine de la longueur d'onde laser, par exemple dans la bande C.

Le ruban du guide laser 4 est de même largeur que celui du premier guide 1 soit environ 2,5 µm. Le composant 100 étant monolithique l'entrée E1 du premier guide 1 correspond plus exactement à l'interface entre le guide laser 4 et ce premier guide 1.

Par ailleurs, un guide optique secondaire 5, de type ruban, d'axe de guidage parallèle à l'axe latéral Y, est divisé en trois sections discontinues de guidage 51, 52, 53 disposées de part et d'autre de la section d'absorbant saturable 43. La largeur du ruban du guide 5 est inférieure à la longueur de la section d'absorbant saturable 43 définissant dans la section 43 une région R d'injection de signaux croisés.

Le guide optique 5 se prolonge au-delà de la région R afin d'éviter l'établissement d'ondes réfléchies produisant des interférences nuisibles à l'oscillateur 10. Ce prolongement du guide 5 peut être aussi bien en colimaçon. De longueur donnée, le guide secondaire 5 est monomode au moins sur une partie de cette longueur et est insensible à l'état de polarisation d'un signal optique d'entrée injecté.

Un amplificateur de type 'SOA' A6 est intercalé entre la section d'entrée 51, côté entrée E5 du guide secondaire 5, et la section de guidage 52 débouchant sur la région R.

Décrivons le fonctionnement dynamique du composant 100 en réponse à un signal optique de données S_{d} reçu d'une fibre optique (non représentée), puis se divisant en deux parties, dites signaux d'entrée S_{E1}, S_{E2}, via un coupleur optique (non représenté) à deux branches de sorties de longueurs adaptées pour injecter de façon synchronisée ces signaux respectivement dans les entrées E5, E2, du guide secondaire 5 et du deuxième guide 2.

Décrivons tout d'abord l'obtention de l'horloge optique C₁.

Le premier signal d'entrée S_{E1} se propage dans le guide secondaire 5 et est d'abord préamplifié par l'amplificateur A6 avant d'être injecté dans la région d'absorbant saturable R. Parallèlement, la section de gain 41 injecte dans cette même région R une onde d'émission spontanée amplifiée. Sans guide secondaire, il se formerait en sortie du guide un signal optique laser sous forme d'un train d'impulsions très bruitées. Ce signal optique laser serait donc peu exploitable comme horloge optique pour l'invention.

Grâce au guide secondaire 5, le premier signal d'entrée S_{E1} injecté joue le rôle d'une commande optique pour l'absorbant saturable 43 qu'il vient illuminer à sa cadence. Même si la puissance optique de ce signal S_{E1} est insuffisante pour la saturation, son absorption permet une modulation de la densité de porteurs dans la région R. Ainsi, la densité de porteurs varie comme une fonction sinusoïdale au cours du temps, et la fréquence de cette sinusoïde est sensiblement égale 160 GHz.

La qualité de l'horloge optique C₁ - formée d'impulsions de largeur temporelle inversement proportionnelle à la largeur spectrale Δf, soit 6,3 ps, et de fréquence de répétition ajustée à 160 GHz - ne dépend pas de la qualité du premier signal d'entrée S_{E1}. Le fonctionnement de l'oscillateur laser passe du régime passif - fondé sur la saturation du matériau absorbant par de la puissance due à l'émission spontanée issue de la section à gain 41, en l'absence de signal injecté - au régime actif-passif dit hybride. Le régime est actif dans la région R de la section 43, le filtrage du premier signal d'entrée S_{E1} modulé créant la modulation sinusoïdale de la densité de porteurs. Dans les autres régions de la section 43 le régime est passif. Ce régime hybride assure une horloge optique C₁ de qualité supérieure, c'est à dire stable en termes de forme d'impulsions et de position temporelle.

Par ailleurs, le guide laser 4 délivre, via l'extrémité G1 en amont de la section de gain 41 par rapport à l'axe X, un signal d'horloge de faible intensité c'₁ pouvant avantageusement être utilisée pour contrôler la qualité de l'horloge optique c₁ .

Décrivons maintenant successivement l'obtention des premier et deuxième signaux de données S₁, S₂ régénérés respectivement suivant un premier régime de régénération de type '3R' et un deuxième régime de régénération de type '2R' (Résynchronisation, Réamplification) et délivrés respectivement par les premier et deuxième guides 1, 2.

Le deuxième signal d'entrée S_{E2} se propage dans le deuxième guide optique 2 et est d'abord préamplifié par l'amplificateur A4 avant d'être injecté dans la première section d'absorbant saturable 31 recevant également l'horloge optique C₁ préalablement amplifié par l'amplificateur A1.

Pour l'horloge optique C₁, la première section 31 joue le rôle d'une porte optique laissant passer les impulsions qui vont former les données '1' et atténuant les impulsions qui vont former les 'O', selon la séquence de données à transmettre portée par le deuxième signal d'entrée S_{E2}.

Les impulsions '1' sont amplifiées par l'amplificateur A2, traversent la deuxième section d'absorbant 32 transparent pour ces impulsions, et sont à nouveau amplifiées par l'amplificateur A3. Les impulsions résiduelles '0' sont faiblement amplifiées par l'amplificateur A2 puis sont très atténuées par l'absorbant de la deuxième section 32, de longueur choisie suffisamment importante pour que ces impulsions résiduelles constituent en sortie un bruit de niveau aussi faible que souhaité. Le taux d'extinction du premier signal régénéré S₁ selon le régime '3R' peut ainsi être fixé à une valeur de consigne imposée par l'application envisagée. Ce premier régime de régénération permet de réaliser aussi une conversion de longueur d'onde lorsque le deuxième signal d'entrée S_{E2} et l'horloge optique ont des longueurs d'onde distinctes.

Selon le second régime de régénération qui permet d'obtenir le deuxième signal régénéré de données S₂, la transmission de l'absorbant saturable 31 est modulée par l'horloge optique C₁. Pour le deuxième signal d'entrée S_{E2}, l'absorbant saturable 31 fonctionne comme une porte optique qui est ouverte au rythme des impulsions d'horloge. Ce signal s_{E2}, modulé à la fréquence d'horloge est donc resynchronisé, puis amplifié par l'amplificateur A5 pour former le signal S₂ à la même longueur d'onde que ce deuxième signal d'entrée S_{E2}.

Bien entendu, l'invention n'est pas limitée au mode de réalisation qui vient d'être décrit. Enfin, on pourra remplacer tout moyen par un moyen équivalent sans sortir du cadre de l'invention.

En particulier, le circuit optique 10 de récupération d'horloge optique peut en variante avoir une structure d'oscillateur laser autopulsant de type classique (non représenté) et essentiellement constituée d'un guide laser en forme de ruban, comprenant successivement suivant le premier axe une section de gain et une section de phase. Le guide optique secondaire 5 est alors disposé pour à injecter le deuxième signal d'entrée SE₂ dans la section de gain .

## Revendications

1. Composant semi-conducteur monolithique (100) pour la régénération selon des premier et deuxième régimes de régénération distincts d'au moins un signal optique de données (S_{d}, S_{E2}) ayant la forme d'une onde optique porteuse modulée en amplitude au rythme d'une fréquence de modulation, ladite régénération utilisant un signal d'horloge optique (C₁) de fréquence de répétition sensiblement égale à ladite fréquence de modulation, ledit composant comprenant :
- une structure d'absorbant saturable (3) comportant à l'une de ses extrémités (Ex1) une première section d'absorbant saturable (31),
- un premier guide optique (1, 11 à 16), définissant un premier axe de guidage (X), disposé de part et d'autre de ladite première section, le premier guide étant apte à injecter ledit signal d'horloge (C₁) dans ladite première section, une sortie (S1) de ce premier guide (1) étant prévue pour délivrer un premier signal régénéré de données (S₁) selon ledit premier régime,
- un deuxième guide optique (2, 21 à 24), définissant un deuxième axe de guidage (Y) se croisant avec le premier axe (X) dans ladite première section, disposé de part et d'autre de ladite première section (31), le deuxième guide étant apte à injecter le signal de données (s_{E2}) dans ladite première section, une sortie (S2) de ce deuxième guide (2) étant prévue pour délivrer un deuxième signal régénéré de données (s₂) selon ledit deuxième régime,
ladite structure d'absorbant saturable ayant une dimension suivant le premier axe de guidage supérieure à sa dimension suivant le deuxième axe de guidage.

2. Composant semi-conducteur monolithique (100) selon la revendication 1, **caractérisé en ce que** ladite structure comporte une deuxième section d'absorbant saturable (32), disposée entre la première section (31) et ladite sortie (S1) du premier guide (1), et **en ce qu'**il comporte un premier amplificateur optique (A2) disposé entre les première et deuxième sections d'absorbant saturable.

3. Composant semi-conducteur monolithique (100) selon la revendication 2, **caractérisé en ce qu'**il comporte
- un second amplificateur optique (A3) disposé entre la deuxième section d'absorbant saturable (32) et ladite sortie (S1) du premier guide, et
- un troisième amplificateur optique (A5) disposé entre la première section d'absorbant saturable (31) et la sortie (S2) dudit deuxième guide.

4. Composant semi-conducteur monolithique (100) selon l'une des revendications 2 ou 3, **caractérisé en ce que** les premier et deuxième axes de guidage (X, Y) sont sensiblement perpendiculaires et lesdits premier et deuxième guides (1, 2) ont une forme de ruban.

5. Composant semi-conducteur monolithique (100) selon la revendication 4, **caractérisé en ce que** :
- la première section d'absorbant saturable (31) a une forme de ruban, de longueur supérieure ou égale à la largeur dudit deuxième guide (2), et
- la deuxième section d'absorbant saturable (32) a une forme de ruban, de longueur supérieure à la longueur du ruban de la première section d'absorbant saturable.

6. Composant semi-conducteur monolithique (100) selon l'une des revendications 1 à 5, **caractérisé en ce qu'**il comporte un circuit optique de récupération d'horloge optique (10) apte à produire ledit signal d'horloge (C₁) et à l'injecter dans l'entrée du premier guide (1).

7. Composant semi-conducteur monolithique (100) selon la revendication 6, **caractérisé en ce que** ledit circuit optique de récupération d'horloge optique (10) comporte un oscillateur laser à blocage de modes ayant un guide laser (4) en forme de ruban, comprenant successivement suivant ledit premier axe (X):
- une section de gain (41),
- une section de phase (42),
- une section d'absorbant saturable (43),
et **en ce qu'**il comporte un guide optique secondaire (5), en forme de ruban, d'axe de guidage distinct du premier axe de guidage, apte à injecter dans ladite section d'absorbant saturable (43) un signal secondaire (S_{E1}) extrait dudit signal de données (S_{d}).

8. Composant semi-conducteur monolithique selon la revendication 6, **caractérisé en ce que** ledit circuit optique de récupération d'horloge optique comporte un oscillateur laser autopulsant ayant un guide laser en forme de ruban, comprenant successivement suivant ledit premier axe :
- une section de gain,
- une section de phase,
et **en ce qu'**il comporte un guide optique secondaire, en forme de ruban, d'axe de guidage distinct du premier axe de guidage, apte à injecter dans ladite section de gain un signal secondaire (SE₁) extrait dudit signal de données (s_{d}).

9. Composant semi-conducteur monolithique (100) selon l'une des revendications 1 à 8, **caractérisé en ce que** la structure d'absorbant saturable (3) est réalisée au moyen d'au moins un élément absorbant saturable de type sans électrode.
